# EUROPEAN PATENT SPECIFICATION

(11) **EP 2 098 818 B1**
(45) Date of publication and mention of the grant of the patent: **07.06.2017**
(21) Application number: 08152206.2
(22) Date of filing: 03.03.2008
(51) Int. Cl.: G01B 3/10

(54) **Measuring device**
Messvorrichtung
Dispositif de mesure

(43) Date of publication of application: 09.09.2009
(73) Proprietor: Hultafors Group AB, 517 21 Bollebygd (SE)
(72) Inventor: Eriksson, Olle, 122 45 Enskede (SE); Crafoord, David, 167 14, BROMMA (SE); Gustafsson, Dan, 517 00, BOLLEBYGD (SE); Jansson, Lennart, 732 47, Arboga (SE)
(74) Representative: Awapatent AB

(56) References cited:
- EP-A- 1 207 265
- WO-A-2005/121694
- WO-A-2007/104983
- FR-A- 2 322 081
- FR-A- 2 696 433
- GB-A- 991 888
- GB-A- 2 216 870
- JP-A- 8 297 001
- SE-B- 458 085
- US-A- 2 684 534

## Description

### Field of the invention

The present invention relates to a measuring device comprising: a housing provided with an opening; a measuring tape storable in a spiral configuration within the housing, the measuring tape being extractable from the housing and returnable into the housing through the opening; and a measuring strip having one end at which the measuring strip is secured to the housing, the measuring strip being adapted to extend from the housing in a direction substantially opposite that of an extracted portion of the measuring tape and substantially in alignment therewith in a use state of the measuring strip, and extend along an at least partly curved outer side wall of the housing in a storage state of the measuring strip.

### Background of the invention

An example of a measuring device of the type mentioned above is disclosed in the US-patent no. 2,684,534 (Ljungberg). Namely, US 2,684,534 discloses a measuring device comprising a casing provided with a mouth portion, a flexible steel measuring tape of the concavo-convex type coiled within the casing and being removable through the mouth portion, and means for selectively locking the tape against movement relatively to the casing. Further, the measuring device of US 2,684,534 comprises a short flexible steel strip secured to a side wall of the casing, which steel strip is intended, when not in use, to lie close against a curved portion of the casing side wall with its free end engaging a pocket formed in the casing. When the end of the steel strip is moved out of the pocket, it assumes a form extending in a direction opposite to that of an extended portion of the measuring tape and substantially in alignment therewith. The steel strip is beneficially used to obtain inside measurement results by combining the length of the steel strip and the deployed length of the measuring tape. However, a problem with the measuring device disclosed in US 2,684,534 is that the steel strip may be difficult and fiddly to get into and out of the pocket by hand. Also, getting the strip into and out of the pocket by hand has proven to be sometimes painful for the user, since the steel strip cuts into the user's fingers.

Further, Swedish patent publication no. 458085 discloses a measuring device in which the casing is provided with a spring-loaded movable holding element having a hook portion for engaging the outer end of a measuring strip (used for inside measurements) to hold it in a recess in the casing. By pushing the holding element away from the measuring strip, the outer end of the measuring strip may then be released from the hook portion, so that the measuring strip may assume a linear condition. Though the measuring strip may be released by just operating the holding element, fastening the measuring strip requires the user to directly operate the measuring strip by hand to place it in the recess and hook it to the holding element, which operation may be unnecessarily tricky and time consuming.

### Summary of the invention

It is therefore an object of the present invention to at least partly overcome the above mentioned drawbacks and to provide an improved measuring device which in particular is simple to operate and use.

These, and other objects that will be apparent from the following description, are achieved by a measuring device according to the appended claim 1, the measuring device comprising: a housing provided with an opening; a measuring tape storable in a spiral configuration within the housing, the measuring tape being extractable from the housing and returnable into the housing through the opening; and a measuring strip having one end at which the measuring strip is secured to the housing, the measuring strip being adapted to extend from the housing in a direction substantially opposite that of an extracted portion of the measuring tape and substantially in alignment therewith in a use state of the measuring strip, and extend along an at least partly curved outer side wall of the housing in a storage state of the measuring strip, wherein the measuring device further comprises an element moveable along the at least partly curved outer side wall of the housing and adapted to retain, at the position of the element along the at least partly curved outer side wall, the measuring strip against the housing, such that when the element is moved away from the secured end of the measuring strip, the measuring strip is brought into the storage state, and when the element is moved towards the secured end of the measuring strip, the measuring strip is allowed to assume the extension of the use state.

Hence, switching between the use state and the storage state and vice versa may be affected by manually operating the element only, without having to directly engage the measuring strip by hand, which facilitates shift of state of the measuring strip.

In embodiments of the present invention, the at least partly curved outer side wall of the housing comprises a flat portion and a concavely curved portion, the measuring strip being attached along the flat portion and extending therefrom in the use state, wherein the element is movable between a first position in which the element is positioned at the flat portion of the outer side wall, and a second position in which the element is positioned at the curved portion of the outer side wall, preferably so as to retainingly engage an end portion of the measuring strip opposite the attached end thereof. Also preferably, the first position of the element corresponds to the use state of the measuring strip, whereas the second position of the element corresponds to the storage state of the measuring strip.

Further, the element is preferably, at the position of the element along the at least partly curved outer side wall, arranged over the measuring strip (that is, at the position of the element along the at least partly curved outer side wall, the strip is generally placed between the element and the housing), such that the mere occurrence of the element serves to retain the measuring strip against the housing, whereby no dedicated means for gripping hold of the strip have to be provided on the element (which nevertheless is an envisaged embodiment), allowing a feasible construction of the element.

Further, the element is preferably slidingly moveable along the at least partly curved outer side wall of the housing. Such an arrangement may beneficially allow the element to follow an at least partly curved outer side wall having a non-uniform curvature.

Further, the housing is preferably provided with guide means for guiding the element along substantially the complete length of the measuring strip as extended in the storage state, to ensure that the entire strip is brought against the at least partly curved outer side wall. The guide means may for instance be at least one groove or guide track into which the element is (partly) inserted.

Further, a recessed groove adapted to accommodate the measuring strip in the storage state may be provided in the at least partly curved outer side wall of the housing. The groove may also preferably accommodate e.g. the above guide means, such that the contour of the at least partly curved outer side wall of the housing is not interfered, at least not when the measuring strip is in its storage state.

In embodiments, the measuring strip is removably attached to the housing, i.e. the strip may be attached to and removed from the housing without significant use of tools or the like. This allows the measuring strip to be easily replaced if the measuring strip is damaged, or should a measuring strip having a different length and/or scale be desired.

Preferably, the measuring strip comprises a protrusion in snap-fit engagement with a corresponding recess provided in the housing. The snap connection beneficially facilitates the locking and removal of the measuring strip, the latter by bringing the protrusion out of engagement with the recess.

Further, the measuring strip may comprise two contact areas adapted to abut oppositely directed surfaces of the housing, wherein at least one of the contact areas is resiliently arranged so as to project into a recess of the housing in a default state, the recess comprising at least one of said surfaces, and be removed from the recess in a temporary state. That is, one contact area is adapted to make contact with one abutment surface of the housing, while the other contact area is adapted to make contact with another abutment surface (of the housing) facing an opposite direction compared to the one abutment surface. Such a construction with counteracting contact surfaces advantageously prevents bi-directional movement of the measuring strip relatively to the housing, preferably bi-directional longitudinal movement, 'longitudinal' movement being movement along the length dimension of the measuring strip, whereas movement other than longitudinal should be prevented by other means. Further, the measuring strip may easily be removed from the housing by bringing the at least one contact area into the temporary state, wherein the at least one contact area preferably lies substantially in the plane of the measuring strip and no longer abuts the corresponding surface of the housing, which otherwise would have prevented removal of the strip.

Also preferably, the at least one resiliently arranged contact area or protrusion is provided by a bent out tab formed by a cut in the measuring strip. Such an integrally formed tab is easily fabricated for instance by a punch and bend operation, and a remote or free end of the tab may constitute the contact area for abutment. Further, the deflection may facilitate mounting of the measuring strip to the housing.

It should be noted that the concept of the removably attached measuring strip may be exercised also in a measuring device not having the above described element.

### Brief description of the drawings

This and other aspects of the present invention will now be described in more detail, with reference to the appended drawings showing currently preferred embodiments of the invention.

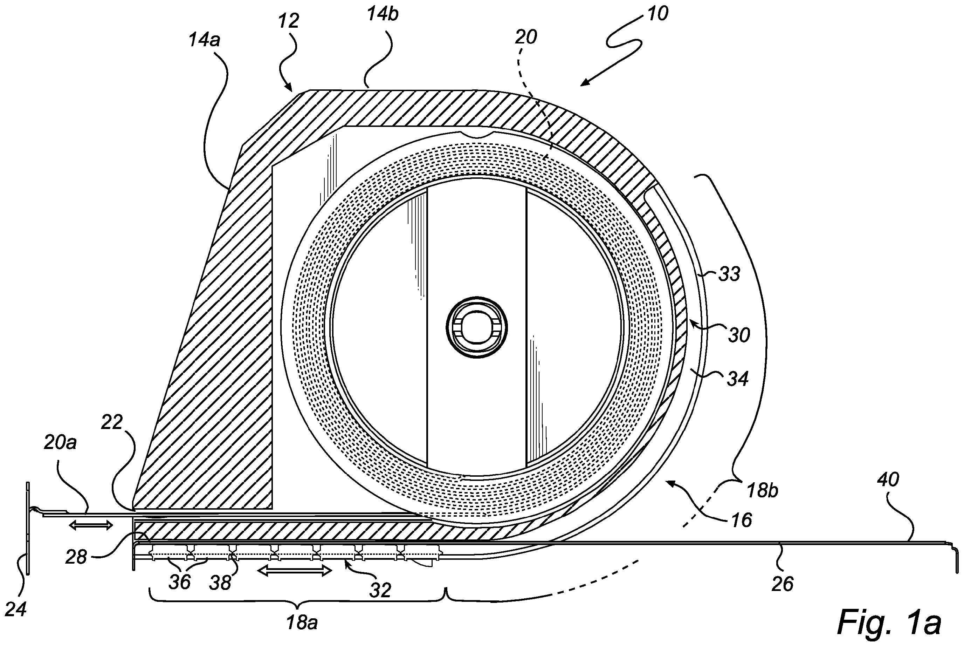

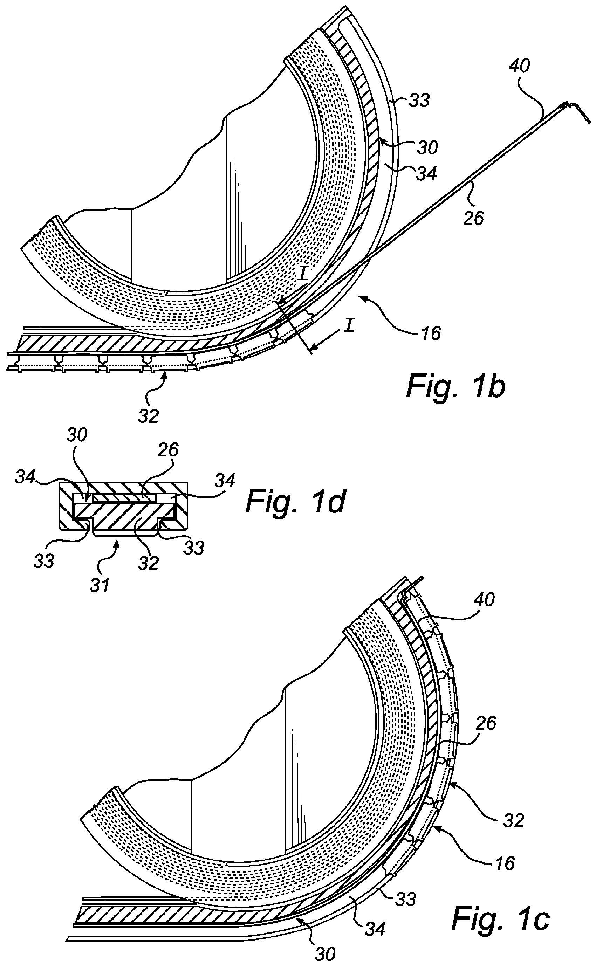

Figs. 1 a-1 c are partly cross-sectional side views illustrating a measuring device according to an embodiment of the invention with a measuring strip in a use state, intermediate state, and in a storage state, respectively.
Fig. 1 d is a cross-sectional view taken along the cut I in fig. 1 b.
Fig. 2 is a perspective view of the measuring device in the state shown in fig. 1 b.
Fig. 3a-3c are partial views of a measuring device to an embodiment of the invention.
Fig. 4 is a perspective view of a measuring strip of the device illustrated in figs. 3a-3c.

### Detailed description

Figs. 1 a-1 c are partly cross-sectional side views illustrating a measuring device 10 according to an embodiment of the invention. The measuring device 10 is generally used for measuring distances.

The measuring device 10 comprises a housing 12 having two flat or plane side walls 14a-14b, and one at least partly curved or circular side wall 16. Specifically, the at least partly curved side wall 16 is constituted by a flat portion 18a and a concavely curved portion 18b, as illustrated.

The measuring device 10 further comprises a flexible, semi-rigid measuring tape 20 normally coiled within the housing 12. The measuring tape 20 is extractable from and returnable into the housing 12 through an opening or mouth 22 of the housing arranged near the corner of the housing which is formed by the side walls 14a and 16. In Figs. 1 a-1 c, a portion 20a of the measuring tape 20 is temporarily extracted for use in distance measurements. Preferably, the measuring tape 20 is of the concave-convex type being preformed to a curvilinear profile across its width, and it may for instance be made of steel. Also preferably, the measuring tape 20 is provided with at least one graduation or scale of length (not shown), e.g. one graduation in centimetres and one graduation in inches. Also preferably, the free end of the tape 20 is provided with a vertical marking lip 24. The measuring tape 20 may have a length of for example 2 or 3 meters as extended, and a width of for example 25 mm.

Though not shown or further described, the measuring device 10 may optionally comprise additional customary elements or means, such as means for automatically retracting or returning the measuring tape from an extracted state, and/or means for locking the measuring tape in certain extracted state so that it cannot be displaced. Realizations of such means are known to a person skilled in the art.

The measuring device 10 further comprises a flexible, semi-rigid measuring strip 26 forming a rearwardly projecting extender, the measuring strip 24 having one end 28 at which the measuring strip 26 is secured to the housing 12. In the disclosed embodiment, the measuring strip 26 is attached along substantially the complete flat portion 18a of the side wall 16, the end 28 being aligned with the opening 22. Preferably, the measuring strip 26 is removably attached to the housing 12, as will be explained in more detail below, but it could alternatively be attached to the housing 12 by means of a screw, rivet or the like (not shown). The measuring strip 26 is switchable between a use position illustrated in fig. 1 a and a storage position illustrated in fig. 1 c. Like the measuring band 20, the measuring strip 26 is preferably of the concave-convex type, and it may for instance be made of steel. Also, the measuring strip 26 may be provided with at least one graduation or scale of length, and/or have or represent a certain fixed length such as four inches or 10 centimetres. The width of the strip 26 may be similar to that of the tape 20.

In the use state, the measuring strip 26 assumes a default straight or rod-like form, extending from the housing 12 in a direction substantially opposite that of the extracted portion 20a of the measuring tape 20 and substantially in alignment therewith, as illustrated in fig. 1 a. In this state, the measuring strip 26 is beneficially used in combination with the measuring tape 20 for internal measurements, as known per se.

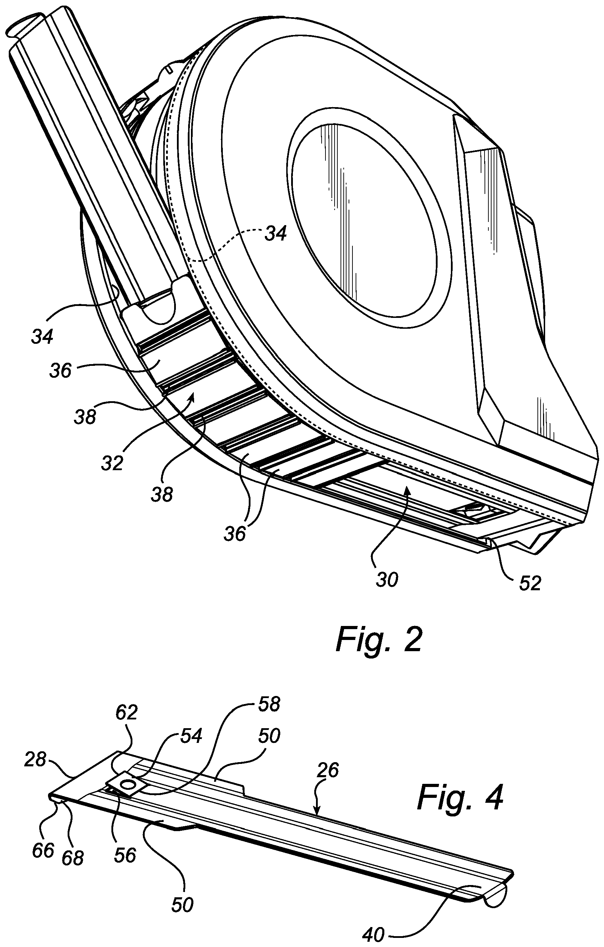

In the storage state, the measuring strip 26 extends in a recessed groove 30 formed in the side wall 16, the groove 30 extending along the flat portion 18a and at least part of the curved portion 18b and being long enough to accommodate the complete measuring strip 26. The measuring strip 26 is switchable between the use state and the storage state by means of a slidable element 32, which slidable element 32 additionally serves to retain the measuring strip 26 in the storage state. Specifically, the element 32 is slidable along the wall 16, between a first position illustrated in fig. 1 a and a second position illustrated in fig. 1 c (fig. 1 b illustrates an intermediate position), and adapted to retain, at the position of the element along the wall 16, the strip 26 against the housing 12 by being positioned over the strip at the position of the element along the wall 16 while being adapted to slide or run substantially free along the length of the strip. To this end, the element 32 is received in grooves or guide tracks 34 formed along the recessed groove 30 by flanges 33 at the opening 31 of the groove 30, as illustrated in figs. 1d and 2. Namely, opposite edges of the element 32 are slidingly arranged in the tracks 34 under the flanges 31, allowing the element 32 to be slid in the tracks 34 along the side wall 16. Further, the measuring strip 26 should along at least a portion of its length be narrower than the opening 31 to allow it to assume its use state. Further, the tracks 34 should be long enough to allow the slidable element 32 to travel along substantially the complete strip 26 as extended in the above mentioned storage state, and the length of the element 32 should be equal to or shorter than the flat portion 18a. To match the concave curvature of the side wall portion 18b, the slidable element 32 is preferably made of several rigid transversal members 36 linked by underlying or intermediate flexible material 38. Also, to match the curvilinear profile across the width of the measuring strip 26, the slidable element 32 could also have a curvilinear profile across its width. Also, the several rigid transversal members 36 may beneficially serve as a gripping area for a user's finger when the user actuates the slidable element 32.

In the first position of the slidable element 32, it is positioned at the flat portion 18a near the opening 22 as seen in fig. 1 a, with the measuring strip 26 placed between the bottom of the groove 30 and the slidable element 32. Here, both the measuring strip 26 and the slidable element 32 are substantially parallel to the flat portion 18a of the side wall 16, and the measuring strip 26 is allowed to assume its straight form and extension of the above mentioned use state.

Then, as the slidable element 32 is moved along the tracks 34 away from the flat portion 18a and into the curved portion 18b, the element 32 slides over the underlying measuring strip 26 and engages the latter so as to force or push the measuring strip 26 towards the side wall 16, causing the strip 26 to lie close against the latter in the groove 30, as illustrated in fig. 1 b. In the intermediate state of fig. 1b, it is to be noted that the portion of the strip 26 between the end 28 and the element 32 follows the curving of the wall 16, while the remaining portion of the strip 26 "follows" the tangent of the curvature in the point where the element 32 is positioned. Also, the force directly exerted by the element 32 on the strip 26 is aligned with the normal of the wall 16 in the point where the element 32 is positioned. That is, at the position of the element 32 along the at least partly curved outer side wall 16, the element 32 retains the measuring strip 26 against the housing 12.

The slidable element 32 is moved further along the curved portion 18b until it reaches its second position where an end portion 40 of the strip 26 opposite the end 28 is engaged, whereby the complete strip 26 is caused to lie close to the side wall 16 in the recessed groove 30 (fig. 1 c), hence the measuring strip 26 is here in its storage position where it is firmly retained by the slidable element 32 positioned over the end 40 on one hand, and by the attached end 28 on the other hand. It should be noted that no dedicated means for locking the slidable element 32 in the second position is usually required, since the element 32 is pushed by the measuring strip 26 striving to resume its default extension towards the tracks 34 with such a force that the element 32 is prevented from moving (without any user actuating the slidable element 32) along the tracks 34 by friction. Further, as the slidable element 32 is moved back to its first position, the measuring strip 26 is allowed assume its straight extension of the use state illustrated in fig. 1 a.

Hence, when using the measuring device 10, a user may switch the measuring strip 24 between the use and storage state simply by sliding the element 32 between the first and second position, and vice versa, without having to directly engage the strip 24 by hand.

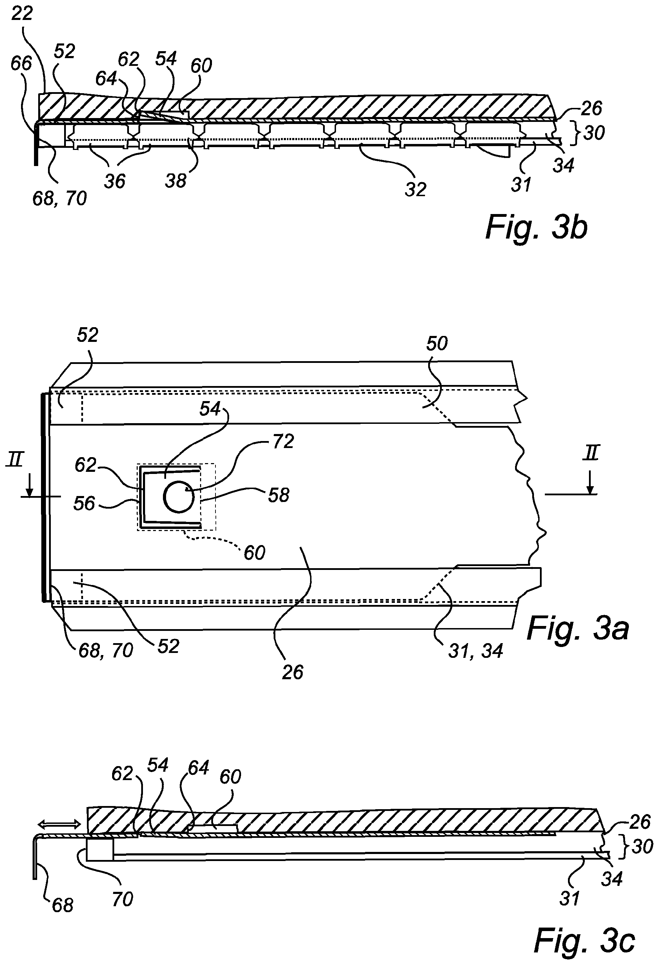

The attachment of a measuring strip to a housing of a measuring device will now be described in detail with reference to figs. 3a-3c. Fig. 3a is a partial, partly cross-sectional bottom view of the measuring device with a measuring stick in an attached state, fig. 3b is a partial side view taken along the cut II in fig. 3a, and fig. 3c is a partial side view also along the cut II but with the measuring stick in an intermediate state. Below, the attachment is described in the context of the above described tape measuring device 10, but the attachment could apply to any measuring device with a measuring strip (e.g. a device without the slidable element).

In the disclosed embodiment, the measuring strip 26 has outwardly extending side wings 50 which bear against the respective side walls of the recessed groove 30 of the measuring device 10. Further, portions of the wings are received in lower grooves 52 provided near the opening 22 of the housing 10, as illustrated in figs. 3a-3c. This construction generally prevents all but longitudinal movement of the strip 26, i.e. movement in the length direction of the measuring strip 24. It is noted that the grooves 52 could be stretched further along the length of the strip 26 for increased support. Also, the strip 26 may be supported by the slidable element (and vice versa), as illustrated in fig. 3a.

Further, a resilient or flexible tab 54 having a substantially square or rectangular shape is formed in the strip 26 by a through-cut or -notch 56 having three sides connected with right angles, as illustrated. At a remaining non-cut "side" 58 of the tab 54, which side 58 is arranged substantially transversal to the longitudinal direction of the strip 26, there is provided a fold such that the tab 54 is bent out from the strip and in a default state projects obliquely towards the bottom of the groove 30 and into a box-shaped recess 60 appropriately located in the bottom of the groove 30, in which recess 60 the distal or free end 62 of the tab 54 opposite the non-cut side 58 makes contact with a vertical side wall 64 (and possible the bottom) thereof (figs. 3a-3b). Namely, the end 62 serves as one contact area of the strip 26, whereas the side wall 64 serves as one abutment surface of the housing 12. In the disclosed embodiment, the end 62 of the tab 54 is predominately pointing towards the end 28 of the strip 26, whereby longitudinal left movement (as seen in the view of figs. 3a-3c) of the measuring strip 26 relative to the housing 12 is prevented. Further, by appropriately selecting the material and dimensions of the strip 26 and tab 54, the tab 54 is made flexible along the fold of side 58, allowing the tab 54 to be temporarily brought out of the recess 60 and substantially in level with the main or principle plane of the measuring strip 26 (without protruding on the other side of the strip), as illustrated in fig. 3c. To this end, right movement is not prevented by the tab 54 since it in this direction exhibits a declining surface and it would only deflect against the edge of the recess.

Instead, to prevent longitudinal right movement of the measuring strip 26 relative to the housing 12, the end 28 of the strip 26 is provided with a second protrusion 66 with a contact area 68 adapted to abut against an exterior surface 70 of the housing 12. The second protrusion 66 is preferably a vertical or right-angled bending of the end 28 (as in figs. 3a-3c), such a bending beneficially also serving as an outwardly projecting marking lip, extending from the opposite side of the strip compared to the tab 54. Alternatively, or complementary, the second protrusion may protrude from the longitudinal edges of the measuring strip 26 at the end 28 thereof.

Further, by bringing the tab 54 out of the recess 60, longitudinal left movement is no longer prevented, whereby the strip 26 easily may be removed from the measuring device 10 by a user by moving the strip 26 to the left as viewed in figs. 3c. To this end, the tab 54 is preferably provided with a central hole 72, allowing the tab 54 to easily be "picked up" by a user by inserting a sharp object into the hole 72 and temporarily bend up the tab 54.

Similarly, a new measuring strip like strip 26 may easily be mounted to the measuring device 10 by inserting the strip 26 into the grooves 52 for instance from the left as viewed in figs. 3c. As the measuring strip 26 is so inserted, the tab 54 will first engage the bottom of the groove 30 and be bent back towards the plane of the strip 26. Then, when the tab 54 reaches the underlying recess 60, the tab 54 snap fits into the recess 60, and the strip 54 is locked. Beneficially, no other means for fastening the strip 26, such as screws or the like, are necessary.

Preferably, the tab 54 is fabricated by a punching and bending operation, which provides for easy manufacturing of the removably attached and hence replaceable measuring strip 26.

Fig. 4 shows the measuring strip 26 alone, namely a measuring strip for use in a measuring device, the measuring strip having two opposite short sides at 28, 40 and a main plane therebetween, wherein the measuring strip further comprises a first contact area 68 generally directed towards one 40 of the two short sides and a second contact area 62 generally directed towards the other one 28 of the two short sides, and wherein at least one 28 of the contact areas is resiliently arranged so as to project away from the plane of the measuring strip in a default state and lie substantially in the plane of the measuring strip in a temporary state. Preferably, the at least one resiliently arranged contact area is provided by a tab 54 formed by a cut or notch 56 in the measuring strip, which tab in the default state is adapted to obliquely project away from the plane of the measuring strip. In particular, the fold 58 lies flush with the main portion or level of the strip 26, while the end 62 projects out a distance from the main portion or level of the strip 26 in the default state and lies substantially flush with the main portion or level of the strip 26 in the temporary state.

The person skilled in the art realizes that the present invention by no means is limited to the preferred embodiments described above. On the contrary, many modifications and variations are possible within the scope of the appended claims.

For instance, the slidable element could be provided with some gripping means for gripping hold of and to retainingly engage the remote side of the measuring strip, making it not necessary to arrange the complete element over the strip.

Also, the side 58 of the tab 54 could be arranged parallel to the long side of the strip, allowing the tab to prevent two-way longitudinal movement.

The side wall 64 could be instead of being vertical be diagonal with generally opposite inclination compared to the tab, which allows some play or mismatch in the construction but with maintained functionality.

## Claims

1. A measuring device (10) comprising:
a housing (12) provided with an opening (22);
a measuring tape (20) storable in a spiral configuration within the housing, the measuring tape being extractable from the housing and returnable into the housing through the opening; and
a measuring strip (26) having one end (28) at which the measuring strip is secured to the housing, the measuring strip being adapted to extend from the housing in a direction substantially opposite that of an extracted portion (20a) of the measuring tape and substantially in alignment therewith in a use state of the measuring strip, and extend along an at least partly curved outer side wall (16) of the housing in a storage state of the measuring strip,
wherein the measuring device further comprises an element (32) moveable along the at least partly curved outer side wall of the housing and adapted to retain, at the position of the element along the at least partly curved outer side wall, the measuring strip against the housing, such that when the element is moved away from the secured end of the measuring strip, the measuring strip is brought into the storage state, and when the element is moved towards the secured end of the measuring strip, the measuring strip is allowed to assume the extension of the use state.

2. A measuring device according to claim 1, wherein the at least partly curved outer side wall of the housing comprises a flat portion (18a) and a concavely curved portion (18b), the measuring strip being attached along the flat portion and extending therefrom in the use state, and wherein the element is movable between a first position in which the element is positioned at the flat portion of the outer side wall, and a second position in which the element is positioned at the curved portion of the outer side wall.

3. A measuring device according to claim 1 or 2, wherein the element at the position of the element along the at least partly curved outer side wall is arranged over the measuring strip.

4. A measuring device according to any one of the preceding claims, wherein the element is slidingly moveable along the at least partly curved outer side wall of the housing.

5. A measuring device according to any one of the preceding claims, wherein the housing is provided with guide means (34) for guiding the element along substantially the complete length of the measuring strip as extended in the storage state.

6. A measuring device according to any one of the preceding claims, wherein a recessed groove (30) adapted to accommodate the measuring strip in the storage state is provided in the at least partly curved outer side wall of the housing.

7. A measuring device according to any one of the preceding claims, wherein the measuring strip is removably attached to the housing.

8. A measuring device according to claim 7, wherein the measuring strip comprises a protrusion (54) in snap-fit engagement with a corresponding recess (60) provided in the housing.

9. A measuring device according to claim 7 or 8, wherein the measuring strip comprises two contact areas (62; 68) adapted to abut oppositely directed surfaces (64; 70) of the housing, and wherein at least one of the contact areas (62) is resiliently arranged so as to project into a recess (60) of the housing in a default state, the recess comprising at least one of said surfaces (64), and be removed from the recess in a temporary state.

10. A measuring device according to claim 8 or 9, wherein the at least one resiliently arranged contact area or protrusion is provided by a bent out tab (54) formed by a cut (56) in the measuring strip.

## Patentansprüche

1. Messvorrichtung (10), umfassend:
ein Gehäuse (12), das mit einer Öffnung (22) versehen ist;
ein Maßband (20), das in einem spiralförmigen Zustand innerhalb des Gehäuses aufbewahrbar ist, wobei das Maßband durch die Öffnung hindurch aus dem Gehäuse herausziehbar und in das Gehäuse zurück verbringbar ist;
und
einen Messstreifen (26), der ein Ende (28) aufweist, an dem der Messstreifen an dem Gehäuse befestigt ist, wobei der Messstreifen dazu ausgelegt ist, sich in einem Benutzungszustand des Messstreifens von dem Gehäuse in einer Richtung zu erstrecken, die derjenigen eines herausgezogenen Abschnitts (20a) des Maßbands im Wesentlichen entgegengesetzt und mit dieser im Wesentlichen ausgerichtet ist, und sich in einem Aufbewahrungszustand des Messstreifens entlang einer mindestens teilweise gekrümmten äußeren Seitenwand (16) des Gehäuses zu erstrecken,
wobei die Messvorrichtung ferner ein Element (32) umfasst, das entlang der mindestens teilweise gekrümmten äußeren Seitenwand des Gehäuses beweglich und dazu ausgelegt ist, an der Position des Elements entlang der mindestens teilweise gekrümmten äußeren Seitenwand den Messstreifen an dem Gehäuse anliegend zu halten, derart dass, wenn das Element von dem befestigten Ende des Messstreifens weg bewegt wird, der Messstreifen in den Aufbewahrungszustand gebracht wird, und wenn das Element zu dem befestigten Ende des Messstreifens hin bewegt wird, der Messstreifen die Erstreckung des Benutzungszustands annehmen kann.

2. Messvorrichtung nach Anspruch 1, wobei die mindestens teilweise gekrümmte äußere Seitenwand des Gehäuses einen flachen Abschnitt (18a) und einen konkav gekrümmten Abschnitt (18b) umfasst, wobei der Messstreifen entlang dem flachen Abschnitt angebracht ist und sich im Benutzungszustand von diesem aus erstreckt und wobei das Element zwischen einer ersten Position, in der das Element an dem flachen Abschnitt der äußeren Seitenwand positioniert ist, und einer zweiten Position, in der das Element an dem gekrümmten Abschnitt der äußeren Seitenwand positioniert ist, beweglich ist.

3. Messvorrichtung nach Anspruch 1 oder 2, wobei das Element an der Position des Elements entlang der mindestens teilweise gekrümmten äußeren Seitenwand über dem Messstreifen angeordnet ist.

4. Messvorrichtung nach einem der vorhergehenden Ansprüche, wobei das Element entlang der mindestens teilweise gekrümmten äußeren Seitenwand des Gehäuses gleitend beweglich ist.

5. Messvorrichtung nach einem der vorhergehenden Ansprüche, wobei das Gehäuse mit Führungsmitteln (34) zum Führen des Elements im Wesentlichen entlang der gesamten Länge des Messstreifens, wie er sich im Aufbewahrungszustand erstreckt, versehen ist.

6. Messvorrichtung nach einem der vorhergehenden Ansprüche, wobei in der mindestens teilweise gekrümmten äußeren Seitenwand des Gehäuses eine ausgesparte Nut (30) vorgesehen ist, die dazu ausgelegt ist, den Messstreifen im Aufbewahrungszustand aufzunehmen.

7. Messvorrichtung nach einem der vorhergehenden Ansprüche, wobei der Messstreifen entfernbar an dem Gehäuse angebracht ist.

8. Messvorrichtung nach Anspruch 7, wobei der Messstreifen einen Vorsprung (54) umfasst, der in Schnappeingriff mit einer entsprechenden Aussparung (60) steht, die in dem Gehäuse vorgesehen ist.

9. Messvorrichtung nach Anspruch 7 oder 8, wobei der Messstreifen zwei Kontaktbereiche (62; 68) umfasst, die dazu ausgelegt sind, an entgegengesetzt ausgerichteten Oberflächen (64; 70) des Gehäuses anzuliegen, und wobei mindestens einer der Kontaktbereiche (62) elastisch angeordnet ist, um in einem Normalzustand in eine Aussparung (60) des Gehäuses hinein vorzustehen, wobei die Aussparung mindestens eine der Oberflächen (64) umfasst, und in einem vorübergehenden Zustand aus der Aussparung entfernt zu werden.

10. Messvorrichtung nach Anspruch 8 oder 9, wobei der mindestens eine elastisch angeordnete Kontaktbereich oder Vorsprung durch eine nach außen gebogene Lasche (54) bereitgestellt wird, die durch einen Einschnitt (56) in dem Messstreifen ausgebildet ist.

## Revendications

1. dispositif de mesure (10) comprenant :
un boîtier (12) doté d'une ouverture (22) ;
un ruban de mesure (20) apte à être rangé dans une configuration en spirale à l'intérieur du boîtier, le ruban de mesure pouvant être extrait du boîtier et replacé dans le boîtier à travers l'ouverture ; et
une bande de mesure (26) présentant une extrémité (28) par laquelle la bande de mesure est fixée au boîtier, la bande de mesure étant adaptée pour s'étendre à partir du boîtier dans une direction substantiellement opposée à celle d'une partie extraite (20a) du ruban de mesure et substantiellement en alignement avec celle-ci dans un état opérationnel de la bande de mesure, et pour s'étendre le long d'une paroi latérale extérieure (16) au moins partiellement courbe du boîtier dans un état rangé de la bande de mesure, le dispositif de mesure comprenant en outre un élément (32) déplaçable le long de la paroi latérale extérieure au moins partiellement courbe du boîtier et adapté pour maintenir la bande de mesure contre le boîtier, à la position de l'élément le long de la paroi latérale extérieure au moins partiellement courbe, de telle façon que lorsque l'élément est déplacé à distance de l'extrémité fixée de la bande de mesure, la bande de mesure est mise dans l'état rangé, et lorsque l'élément est déplacé vers l'extrémité fixée de la bande de mesure, la bande de mesure peut s'étirer dans l'état opérationnel.

2. Dispositif de mesure selon la revendication 1, dans lequel la paroi latérale extérieure au moins partiellement courbe du boîtier comprend une partie plate (18a) et une partie courbe concave (18b), la bande de mesure étant attachée le long de la partie plate et s'étendant à partir de celle-ci dans l'état opérationnel, et dans lequel l'élément est déplaçable entre une première position dans laquelle l'élément est positionné au niveau de la partie plate de la paroi latérale extérieure, et une deuxième position dans laquelle l'élément est positionné au niveau de la partie courbe de la paroi latérale extérieure.

3. Dispositif de mesure selon la revendication 1 ou 2, dans lequel l'élément à la position de l'élément le long de la paroi latérale extérieure au moins partiellement courbe est disposé par-dessus la bande de mesure.

4. Dispositif de mesure selon l'une quelconque des revendications précédentes, dans lequel l'élément est déplaçable de façon coulissante le long de la paroi latérale extérieure au moins partiellement courbe du boîtier.

5. Dispositif de mesure selon l'une quelconque des revendications précédentes, dans lequel le boîtier est doté de moyens de guidage (34) permettant de guider l'élément substantiellement le long de toute la longueur de la bande de mesure étirée dans l'état opérationnel.

6. Dispositif de mesure selon l'une quelconque des revendications précédentes, dans lequel une rainure renfoncée (30) adaptée pour accueillir la bande de mesure dans l'état rangé est prévue dans la paroi latérale extérieure au moins partiellement courbe du boîtier.

7. Dispositif de mesure selon l'une quelconque des revendications précédentes, dans lequel la bande de mesure est fixée de façon détachable au boîtier.

8. Dispositif de mesure selon la revendication 7, dans lequel la bande de mesure comprend une saillie (54) en engagement par encliquetage avec une cavité (60) correspondante prévue dans le boîtier.

9. Dispositif de mesure selon la revendication 7 ou 8, dans lequel la bande de mesure comprend deux zones de contact (62 ; 68) adaptées pour butées contre des surfaces opposées (64 ; 70) du boîtier, et dans lequel au moins l'une des zones de contact (62) est conçue de façon élastique, de manière à faire saillie dans une cavité (60) du boîtier dans un état par défaut, la cavité comprenant au moins l'une desdites surfaces (64), et à être retirée de la cavité dans un état temporaire.

10. Dispositif de mesure selon la revendication 8 ou 9, dans lequel l'au moins une zone de contact ou saillie conçue de façon élastique est fournie par une languette courbée vers l'extérieur (54) formée par une coupure (56) dans la bande de mesure.
